# EUROPEAN PATENT APPLICATION

(11) **EP 4 538 126 A1**
(43) Date of publication of application: **16.04.2025**
(21) Application number: 24198258.6
(22) Date of filing: 03.09.2024
(51) Int. Cl.: B60T 7/12, B60T 7/22, B60T 8/1755

(54) **VEHICLE CONTROL SYSTEM**

(30) Priority: 11.10.2023 JP 2023176107
(71) Applicant: Suzuki Motor Corporation, Shizuoka 432-8611 (JP)
(72) Inventor: SASAKI, Yukimori, HAMAMATSU-SHI, 432-8611 (JP)
(74) Representative: Plasseraud IP

(57) **Abstract**

[Problem to be Solved] To provide a vehicle control system that can perform necessary automatic brake control even if an anomaly occurs in an acceleration sensor when a vehicle is likely to collide with an obstacle.

[Solution] A vehicle control system 1 includes an obstacle detector 10 that detects an obstacle ahead of a vehicle, an acceleration detector 11 that detects the longitudinal acceleration rate of the vehicle, a collision determination unit 21a that determines the probability of collision with the obstacle, a deceleration setting unit 21b that sets a target deceleration for performing automatic brake control according to the collision possibility determined by the collision determination unit 21a, a brake control unit 21c that controls the deceleration rate of the vehicle on the basis of the longitudinal acceleration rate detected by the acceleration detector 11 such that a braking force is generated according to the target deceleration rate set by the deceleration setting unit 21b, an anomaly determination unit 22 that determines an anomaly of the acceleration detector 11, and an adjusting unit 25 that changes the target deceleration rate to a preset fixed value and adjusts the activation of the brake control unit 21c so as to generate a braking force according to the fixed value, when an anomaly of the acceleration detector 11 is determined by the anomaly determination unit 22.

## Description

### [Technical Field]

The present invention relates to a vehicle control system.

### [Background Art]

Vehicle control systems have been in practical use in which brakes are automatically activated when a collision with obstacles such as a vehicle ahead is predicted. Furthermore, systems in which automatic brakes are activated after a collision with an obstacle are known. For example, Patent Literature 1 discloses a device that activates automatic brakes at the instant of a collision with a vehicle on the basis of a pressure detected by a collision sensor and an acceleration rate measured by an acceleration sensor (G sensor). In the device of Patent Literature 1, during a failure diagnosis of an acceleration sensor or after a confirmation of a failure, a braking force of the automatic brakes after a collision is changed to be smaller than an ordinary braking force of the automatic brakes.

### [Citation List]

### [Patent Literature]

[Patent Literature 1] JP 6071987 B2

### [Summary of Invention]

### [Problem to be Solved by the Invention]

In a control system that activates automatic brakes to reduce damage caused by collision when a collision with an obstacle is predicted, control using a vehicle acceleration rate detected by an acceleration sensor may be performed. In such a system, when a braking force applied by automatic brakes is reduced in the event of a failure of an acceleration sensor as described in Patent Literature 1, the effect of reducing collision damage may be lessened as compared with a normal effect.

The present invention has been devised in view of such circumstances. An object of the present invention is to provide a vehicle control system that can perform necessary automatic brake control even if an anomaly occurs in an acceleration sensor when a vehicle is likely to collide with an obstacle.

### [Means for Solving the Problem]

According to an aspect of the present invention, a vehicle control system includes an obstacle detector that is configured to detect an obstacle ahead of a vehicle, an acceleration detector that is configured to detect a longitudinal acceleration rate of the vehicle, a collision determination unit that is configured to determine a probability of collision with the obstacle, a deceleration setting unit that is configured to set a target deceleration rate for performing automatic brake control according to a collision probability determined by the collision determination unit, a brake control unit that is configured to control a deceleration rate of the vehicle on the basis of the longitudinal acceleration rate detected by the acceleration detector such that a braking force is generated according to the target deceleration rate set by the deceleration setting unit, an anomaly determination unit that is configured to determine an anomaly of the acceleration detector, and an adjusting unit that is configured to change the target deceleration rate to a preset fixed value and to adjust the activation of the brake control unit so as to generate a braking force according to the fixed value, when an anomaly of the acceleration detector is determined by the anomaly determination unit.

### [Advantageous Effect of Invention]

A vehicle control system according to the present invention can perform necessary automatic brake control when a vehicle is likely to collide with an obstacle even if an anomaly occurs in an acceleration sensor.

### [Brief Description of Drawings]

[Figure 1] Figure 1 is a block diagram illustrating a schematic configuration of a vehicle control system according to an embodiment of the present invention.
[Figure 2] Figure 2 is a flowchart showing a flow of automatic brake control according to the embodiment.

### [Mode for Carrying Out the Invention]

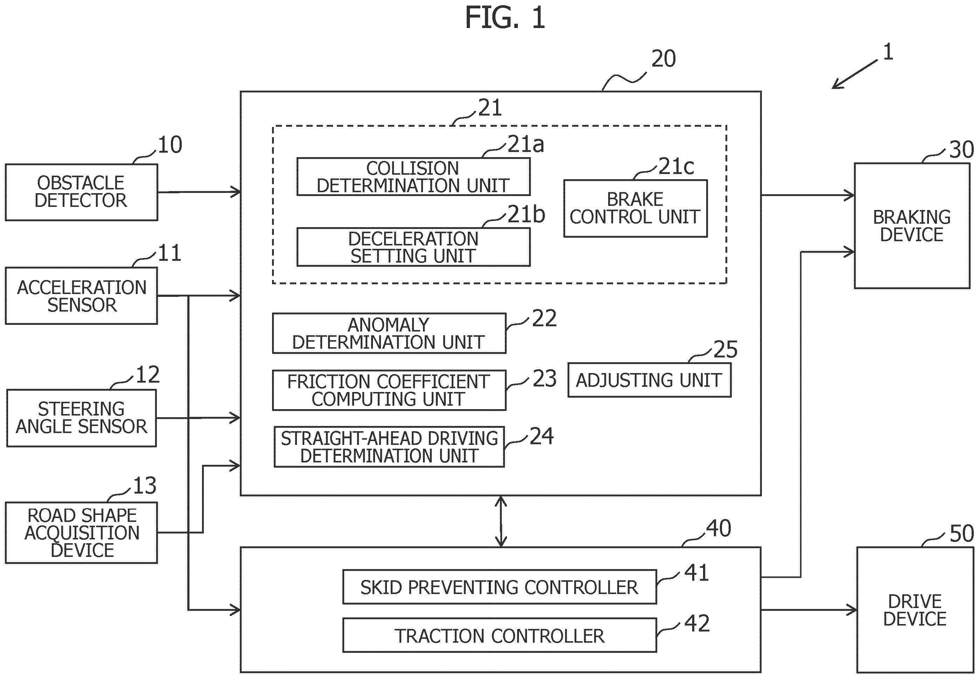

A vehicle control system according to an embodiment of the present invention will be specifically described below with reference to the accompanying drawings. Figure 1 is a block diagram illustrating a schematic configuration of the vehicle control system according to the present embodiment.

As illustrated in Figure 1, a vehicle control system 1 includes, for example, an obstacle detector 10 that detects an obstacle ahead of a vehicle, an acceleration sensor 11 that detects the longitudinal acceleration of the vehicle, a controller 20 that performs control associated with an automatic brake control of the vehicle, and a braking device 30. The vehicle control system 1 according to the present embodiment is mounted in the vehicle and is configured to perform control associated with the automatic brake control of the vehicle. Moreover, the controller 20 of the vehicle control system 1 is configured to transmit and receive signals to and from a driving stabilizing control system 40 that controls the behaviors or the like of the vehicle to support stable driving of the vehicle.

The obstacle detector 10 is configured to detect an obstacle ahead of the vehicle and measure a relative distance (a distance between vehicles, or inter-vehicle distance) between the vehicle and the obstacle. As the obstacle detector 10, for example, a millimeter wave radar, a camera, a sonar sensor, or a LiDAR (Light Detection and Ranging) can be used. A relative distance is dynamically measured by the obstacle detector 10 at predetermined measuring intervals. A relative distance between the vehicle and an obstacle detected by the obstacle detector 10 is input to the controller 20.

The acceleration sensor 11 is installed near the position of the center of gravity of the vehicle and is configured to detect the acceleration rate of the vehicle. The acceleration sensor 11 is an acceleration detector that measures at least an acceleration rate of the vehicle in a longitudinal direction (longitudinal acceleration rate). The acceleration sensor 11 may be configured to detect an acceleration rate of the vehicle in a lateral direction (lateral acceleration rate) in addition to a longitudinal acceleration rate. In this case, the acceleration sensor 11 can be configured as a biaxial acceleration sensor that detects acceleration rates of the vehicle in the longitudinal direction and in the lateral direction. A vehicle acceleration rate detected by the acceleration sensor 11 is input to the controller 20.

The controller 20 is configured with a computer including, for example, a ROM in which programs and data are stored, a CPU that performs arithmetic processing, a RAM in which dynamic data and arithmetic processing results are stored, and an input/output interface. The controller 20 is configured to perform the functions of, for example, an AEB control unit 21, an anomaly determination unit 22, a friction coefficient computing unit 23, a straight-ahead driving determination unit 24, and an adjusting unit 25 and to control the overall vehicle control system 1. The vehicle control system 1 may include the AEB control unit 21 as a controller separate from the controller 20.

The AEB control unit 21 is configured to perform automatic brake control for activating automatic braking, that is, so-called autonomous emergency braking (AEB) by means of the braking device 30 according to the probability of collision between the vehicle and an obstacle. The AEB control unit 21 includes, for example, a collision determination unit 21a, a deceleration setting unit 21b, and a brake control unit 21c. Automatic brake control performed by the AEB control unit 21 according to the present embodiment includes first brake control that generates a weak braking force to encourage or prompt a driver to perform a braking operation when it is determined that the vehicle is likely to collide with an obstacle, and second brake control that generates a strong braking force according to a maximum deceleration rate when it is determined that a collision with an obstacle is unavoidable.

The collision determination unit 21a is configured to determine the probability of collision between the vehicle and an obstacle on the basis of a relative distance from the obstacle input from the obstacle detector 10. For example, the collision determination unit 21a can calculate, as a probability of collision, a time-to-collision TTC until the vehicle approaching an obstacle comes into contact with the obstacle. Specifically, the collision determination unit 21a calculates a relative speed between the vehicle and an obstacle from a relative distance from the obstacle, the relative speed indicating a change of a relative distance per unit time, and the collision determination unit 21a calculates the time-to-collision TTC as a value obtained by dividing the relative distance by the relative speed.

The deceleration setting unit 21b is configured to set a target deceleration rate for performing automatic brake control according to the collision probability determined by the collision determination unit 21a. For example, when the vehicle and an obstacle come close to each other and the time-to-collision TTC is equal to or smaller than a preset first threshold value TTC1, the deceleration setting unit 21b sets a first deceleration rate for performing the first brake control, as a target deceleration rate (requested deceleration rate). The first deceleration rate is designed to activate a warning brake for informing a driver about the approach of the vehicle to the obstacle by generating a weak braking force. The first deceleration rate can be set at, for example, about 0.4 G.

When the vehicle and the obstacle further come close to each other and the time-to-collision TTC is equal to or smaller than a preset second threshold value TTC2, the deceleration setting unit 21b sets a second deceleration rate for performing the second brake control, as a target deceleration rate. The second threshold value TTC2 is a threshold value for determining that a collision between the vehicle and an obstacle is unavoidable. The second threshold value TTC2 is set at a value smaller than the first threshold value TTC1. The second deceleration rate is designed to activate an emergency brake for avoiding a collision with an obstacle or for reducing damage upon collision. The second deceleration rate can be set at a value greater than the first deceleration, e.g., at about 1 G.

The brake control unit 21c is configured to control the braking device 30 such that a braking force is generated according to the target deceleration rate set by the deceleration setting unit 21b. At this point, the brake control unit 21c performs feedback control such that an actual longitudinal acceleration agrees with the target deceleration rate, on the basis of a vehicle longitudinal acceleration detected by the acceleration sensor 11. This is because even if the brake hydraulic pressure of the braking device 30 is set to generate a braking force according to the target deceleration rate, an actually generated deceleration rate of the vehicle may be changed by the influence of various factors of the vehicle or around the vehicle, the factors including, for example, the loading state of the vehicle, a road grade, and a road surface friction coefficient (road surface µ).

The braking device 30 includes brakes provided on wheels (e.g., a disk brake, a drum brake, or the like), a brake actuator connected to the brakes through hydraulic piping, and a brake controller, and is configured to control a hydraulic pressure according to a deceleration command from the controller 20 and to control the braking forces of the brakes.

The driving stabilizing control system 40 is a system for controlling the vehicle to travel stably, and includes, for example, a skid preventing controller 41 and a traction controller 42. The skid preventing controller 41 is configured to control the braking device 30 and a drive device 50 and to adjust the braking force and driving force of the vehicle to prevent a skid of the vehicle and stably drive the vehicle. The traction controller 42 is configured to control the braking device 30 and the drive device 50 such that the braking force and driving force of the vehicle are adjusted to prevent a skid (slip) of tires at the start and at the acceleration of the vehicle. The skid preventing control and the traction control are known vehicle controls and thus a detailed description thereof is omitted. The driving stabilizing control system 40 is an optional constituent feature and is not an essential constituent feature of the vehicle control system 1 according to the present embodiment.

As described above, when the AEB control unit 21 performs automatic brake control according to the probability of a collision between the vehicle and an obstacle, the vehicle control system 1 according to the present embodiment performs feedback control such that an actual longitudinal acceleration rate agrees with the target deceleration rate, on the basis of a vehicle longitudinal acceleration rate detected by the acceleration sensor 11. If an anomaly occurs in the acceleration sensor 11 and an actual correct longitudinal acceleration rate cannot be obtained, feedback control cannot be performed and a deceleration rate of the vehicle fails to be controlled precisely.

When the acceleration sensor 11 is configured as a biaxial acceleration sensor and the output signal of the sensor is used in the driving stabilizing control system 40 that performs skid preventing control and the traction control as well as in the AEB control unit 21, a correct longitudinal acceleration rate and a correct lateral acceleration rate of the vehicle cannot be obtained in the event of an anomaly in the acceleration sensor 11. Thus, the driving stabilizing control system 40 is typically configured to stop the function. In a state in which the function of stable driving control (behavior control) of the vehicle by the skid preventing control and the traction control is stopped, the behavior of the vehicle may become unstable when automatic brake control by the AEB control unit 21 is activated.

Thus, the vehicle control system 1 may prohibit the execution of automatic brake control by the AEB control unit 21 in the event of an anomaly in the acceleration sensor 11. However, if the vehicle is likely to collide with an obstacle, necessary automatic brake control is desirably performed even in the absence of feedback control.

Thus, even if an anomaly occurs in the acceleration sensor 11 and the feedback control for a deceleration rate cannot be performed, the vehicle control system 1 according to the present embodiment is configured to perform automatic brake control when the vehicle is likely to collide with an obstacle. Hence, the vehicle control system 1 further includes a steering angle sensor 12 and a road shape acquisition device 13. The controller 20 is also configured to perform the functions of, for example, the anomaly determination unit 22, the friction coefficient computing unit 23, the straight-ahead driving determination unit 24, and the adjusting unit 25 in addition to the AEB control unit 21.

The steering angle sensor 12 is configured to detect the steering angle (front wheel steering angle) of the vehicle. The steering angle detected by the steering angle sensor 12 is input to the controller 20.

The road shape acquisition device 13 is configured to acquire information about a road shape ahead of the vehicle in the traveling direction. For example, the road shape acquisition device 13 can be configured as a camera that captures an image of a region ahead of the vehicle or a map information database containing information about a road shape. As the road shape acquisition device 13, a LiDAR that acquires a road shape ahead of the vehicle as point cloud data or other range sensors may also be used. The information about the road shape acquired by the road shape acquisition device 13 is input to the controller 20.

The anomaly determination unit 22 is configured to detect an anomaly or defect of the acceleration sensor 11. For example, when the acceleration sensor 11 has output data outside a normal range, when the output data is substantially fixed at a constant value and is not variable, or when data is not output because of a failed CPU in the sensor, the anomaly determination unit 22 can determine that an anomaly has occurred in the acceleration sensor 11. Alternatively, if the acceleration sensor 11 is also used in another vehicle control system (e.g., the driving stabilizing control system 40) and the anomaly determination unit 22 is configured to determine an anomaly of the acceleration sensor 11 in the driving stabilizing control system 40, the anomaly determination unit 22 may determine that an anomaly has occurred in the acceleration sensor 11 when an anomaly determination signal is input from the driving stabilizing control system 40.

The friction coefficient computing unit 23 is configured to compute the friction coefficient of a road surface on which the vehicle travels. The friction coefficient can be determined by various methods. In the present embodiment, the friction coefficient computing unit 23 desirably estimates a road surface friction coefficient without using the measured value of the longitudinal acceleration rate of the vehicle detected by the acceleration sensor 11. For example, the road surface friction coefficient can be estimated from the relationship between the estimated value of a brake torque applied to a wheel and the estimated value of a vehicle body deceleration based on the output signal of the wheel speed sensor. The friction coefficient computing unit 23 may be configured to estimate whether the friction coefficient of the road surface corresponds to a so-called low friction road or low µ road, instead of computing the value of the friction coefficient of the road surface.

The straight-ahead driving determination unit 24 is configured to determine whether the vehicle is traveling straight ahead. The straight-ahead driving determination unit 24 can determine whether the vehicle is traveling straight ahead, on the basis of, for example, a vehicle steering angle (front wheel steering angle) input from the steering angle sensor 12. Alternatively, the straight-ahead driving determination unit 24 may determine whether or not a road on which the vehicle is traveling is a straight road on the basis of information (e.g., image data, point cloud data, and map information) about road shapes input from the road shape acquisition device 13. When the road is a straight road, it can be estimated that the vehicle is traveling straight ahead. In this case, the straight-ahead driving determination unit 24 may act as a straight road determination unit.

The adjusting unit 25 is configured to adjust the activation of automatic brake control performed by the AEB control unit 21. Specifically, when an anomaly of the acceleration sensor 11 is determined by the anomaly determination unit 22, the adjusting unit 25 changes a target deceleration rate to a preset fixed value and adjusts the activation of the brake control unit 21c such that a braking force is generated according to the fixed value without feedback control. In this case, the fixed value of the deceleration can be set to the maximum deceleration rate in automatic brake control. In the case of the maximum deceleration rate = the second deceleration rate, when an anomaly occurs in the acceleration sensor 11, the adjusting unit 25 prohibits the execution of the first brake control for generating a weak braking force according to the first deceleration rate and only permits the execution of the second brake control for generating a strong braking force according to the second deceleration rate (maximum deceleration rate). The target deceleration rate is set to the maximum deceleration rate, so that a desired deceleration, that is, a desired braking force can be generated without detailed control on the deceleration.

As described above, considering a state in which the function of stable driving control (behavior control) of the vehicle by the skid preventing control and the traction control is stopped when an anomaly occurs in the acceleration sensor 11, the automatic brake control may be performed only in a state in which unstable vehicle behaviors such as a skid are unlikely to occur even when the automatic brake control is performed. In other words, in a state in which vehicle unstable behaviors are expected, the execution of automatic brake control may be prohibited.

Thus, the adjusting unit 25 adjusts the activation of automatic brake control on the basis of the road surface friction coefficient of the vehicle computed by the friction coefficient computing unit 23. Specifically, when an anomaly of the acceleration sensor 11 is determined and the road surface friction coefficient is less than a predetermined value, the adjusting unit 25 prohibits the execution of automatic brake control. In this case, the predetermined value of the road surface friction coefficient can be set at, for example, a value (e.g., µ = about 0.3) for determining whether a road surface is a so-called low friction road.

Moreover, the adjusting unit 25 adjusts the activation of automatic brake control depending upon whether the vehicle is traveling straight ahead. Specifically, when an anomaly of the acceleration sensor 11 is determined and the straight-ahead driving determination unit 24 determines that the vehicle is not traveling straight ahead or a road on which the vehicle is traveling is not a straight road, the adjusting unit 25 prohibits the execution of automatic brake control.

The vehicle control system 1 is typically configured to allow override by driver intervention during the execution of automatic brake control. Override is the function of stopping ongoing control and transferring authority to a driver when the driver performs intervening operation at an override threshold value or greater during the execution of automatic brake control. When the driver decides, in an instant, to perform steering or the like during the execution of automatic brake control and the automatic brake control is overridden, the automatic brake control is stopped to shift to a manual operation mode. For instance, in a state in which the function of stable driving control (behavior control) of the vehicle by the skid preventing control and the traction control is stopped due to an anomaly occurring in the acceleration sensor 11, if the automatic brake control is overridden by quick driving operations such as quick steering by a driver, the behavior of the vehicle may become unstable, which may pose a risk.

Thus, when an anomaly of the acceleration sensor 11 is determined, the adjusting unit 25 sets the override threshold value of automatic brake control at a value OR2 smaller than an override threshold value OR1 for a case in which no anomaly of the acceleration sensor 11 is determined (OR1 > OR2). By reducing the override threshold value, automatic brake control is more likely to be overridden by the intervening operation by the driver than in a case in which an anomaly of the acceleration sensor 11 is not determined.

The override of automatic brake control may include acceleration override by acceleration intervention by the driver, deceleration override by deceleration intervention by the driver, and steering override by steering intervention by the driver. The adjusting unit 25 particularly changes an override threshold value for determining the presence or absence of steering override by steering intervention. When a steering torque (or a steering angle or a steering angle speed) by driver manual steering is equal to or higher than the override threshold value, the automatic brake control is overridden. By reducing the override threshold value, the automatic brake control is more likely to be overridden by driver manual steering than in a case in which no anomaly of the acceleration sensor 11 is determined. Thus, when an anomaly occurs in the acceleration sensor 11, the automatic brake control can be immediately terminated by intervening operation by the driver, achieving a driving operation in response to a driver's intention.

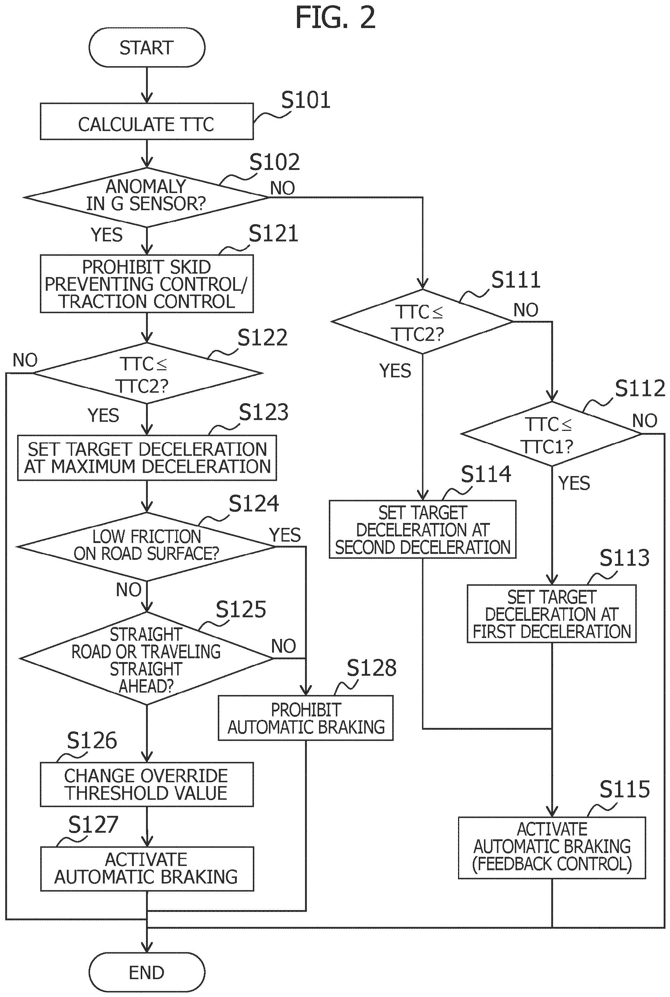

Referring to the flowchart of Figure 2, a flow of automatic brake control according to the present embodiment will be described in detail. Processing in Figure 2 is periodically performed mainly in the controller 20.

First, in step S101, the collision determination unit 21a calculates the time-to-collision TTC of the vehicle and an obstacle on the basis of a relative distance input from the obstacle detector 10.

In step S102, the anomaly determination unit 22 determines the presence or absence of an anomaly in the acceleration sensor 11. If the acceleration sensor 11 has an anomaly, the process advances to step S121 to adjust the activation of automatic brake control. If the acceleration sensor 11 has no anomaly, the process advances to step S111 to perform ordinary automatic brake control. First, the flow of ordinary automatic brake control will be described below.

In step S111, it is determined whether or not the time-to-collision TTC calculated in step S101 is equal to or less than the preset second threshold value TTC2. If the time-to-collision TTC is greater than the second threshold value TTC2, the process advances to step S112 to determine whether the time-to-collision TTC is equal to or less than the preset first threshold value TTC1. When the time-to-collision TTC is equal to or less than the first threshold value TTC1, the process advances to step S113, and the first deceleration rate for performing the first brake control is set as a target deceleration rate by the deceleration setting unit 21b. If the time-to-collision TTC is greater than the first threshold value TTC1, the process is terminated.

If it is determined in step Sill that the time-to-collision TTC is equal to or less than the second threshold value TTC2, the process advances to step S114, and the second deceleration rate (maximum deceleration rate) for performing the second brake control is set as a target deceleration rate by the deceleration setting unit 21b.

In step S115, the brake control unit 21c controls the braking device 30 so as to generate a braking force according to the target deceleration rate set in step S113 or in step S 114 by performing feedback control based on a vehicle longitudinal acceleration rate detected by the acceleration sensor 11.

If it is determined in step S102 that the acceleration sensor 11 has an anomaly, the adjusting unit 25 transmits a command to the driving stabilizing control system 40 in step S121 so as to prohibit the activation of skid preventing control for reducing a skid of the vehicle and the activation of traction control for reducing an overspeed of wheels.

In step S122, it is determined whether the time-to-collision TTC is equal to or less than the second threshold value TTC2. If it is determined that the time-to-collision TTC is equal to or less than the second threshold value TTC2, the process advances to step S123, and the maximum deceleration rate is set as a target deceleration rate by the deceleration setting unit 21b. If the time-to-collision TTC is greater than the second threshold value TTC2, the process is terminated.

In step S124, the adjusting unit 25 determines whether or not the road surface friction coefficient of the vehicle computed by the friction coefficient computing unit 23 is less than a predetermined value. If the road surface friction coefficient is equal to or greater than the predetermined value, the process advances to step S125. If the road surface friction coefficient is less than a predetermined value corresponding to, for example, a low friction road or low µ road, the process advances to step S128 to prohibit the execution of automatic brake control, and then the process is terminated.

In step S125, the straight-ahead driving determination unit 24 determines whether or not the vehicle is traveling straight ahead or whether or not a road on which the vehicle is traveling is a straight road, on the basis of information input from the road shape acquisition device 13. If it is determined that the vehicle is traveling straight ahead or a road on which the vehicle is traveling is a straight road, the process advances to step S126. If it is determined that the vehicle is not traveling straight ahead or a road on which the vehicle is traveling is a straight road, the process advances to step S128 to prohibit the execution of automatic brake control by means of the adjusting unit 25, and then the process is terminated.

In step S126, the adjusting unit 25 changes an override threshold value for determining the presence or absence of steering override of automatic brake control by steering intervention, to the value OR2 which is less than the normal override threshold value OR1 for which no anomaly of the acceleration sensor 11 is determined.

In step S127, the brake control unit 21c controls the braking device 30 without feedback control for a deceleration such that a braking force is generated according to the target deceleration rate (maximum deceleration rate) set in step S123. At this point, if a steering operation is performed by a driver at the changed override threshold value OR2 or greater, the automatic brake control is overridden. Then, this process is terminated. In addition, after the completion of this process, the override threshold value OR2 is reset to the normal override threshold value OR1.

In the vehicle control system 1 according to the present embodiment, the following operational effects can be obtained.
(1) The vehicle control system 1 includes the obstacle detector 10 that is configured to detect an obstacle ahead of a vehicle, the acceleration sensor 11 that is configured to detect the longitudinal acceleration rate of the vehicle, the collision determination unit 21a that is configured to determine the probability of collision with the obstacle, the deceleration setting unit 21b that is configured to set a target deceleration rate for performing automatic brake control according to the collision probability determined by the collision determination unit 21a, the brake control unit 21c that is configured to control the braking device 30 so as to generate a braking force according to the target deceleration set by the deceleration setting unit 21b by performing feedback control on the deceleration rate of the vehicle on the basis of the longitudinal acceleration rate detected by the acceleration sensor 11, the anomaly determination unit 22 that is configured to determine an anomaly of the acceleration sensor 11, and the adjusting unit 25 that is configured to change the target deceleration rate to a preset fixed value and to adjust the activation of the brake control unit 21c so as to generate a braking force according to the fixed value without performing feedback control when an anomaly of the acceleration sensor 11 is determined by the anomaly determination unit 22.
   The brake control unit 21c is typically configured to control the braking device 30 by performing feedback control on the deceleration rate of the vehicle on the basis of the longitudinal acceleration rate, which is detected by the acceleration sensor 11, when automatic brake control is performed. However, a correct longitudinal acceleration rate cannot be obtained when an anomaly occurs in the acceleration sensor 11, thereby interrupting feedback control. However, if the execution of automatic brake control is prohibited only on the basis of the occurrence of an anomaly in the acceleration sensor 11, collision damage cannot be reduced by automatic brake control when the vehicle and an obstacle are likely to collide with each other. Thus, in the vehicle control system 1 according to the present embodiment, the activation of the brake control unit 21c is adjusted so as to generate a braking force according to the fixed value without performing feedback control when an anomaly of the acceleration sensor 11 is determined. Hence, even if a deceleration rate cannot be controlled precisely by feedback control, necessary automatic brake control can be performed when there is a high probability of collision with an obstacle.
(2) The adjusting unit 25 sets a maximum deceleration rate in automatic brake control as the fixed value of the target deceleration rate. Automatic brake control is performed according to the maximum deceleration rate, achieving a desired deceleration without performing detailed deceleration control by feedback control.
(3) The automatic brake control includes a first brake control that generates a braking force according to a first deceleration rate lower than the maximum deceleration rate to prompt a driver to perform a braking operation when the collision determination unit 21a determines that the vehicle is likely to collide with an obstacle, and a second brake control that generates a braking force according to the maximum deceleration rate when the collision determination unit 21a determines that a collision with an obstacle is unavoidable. When an anomaly of the acceleration sensor 11 is determined by the anomaly determination unit 22, the adjusting unit 25 prohibits the execution of the first brake control. Specifically, in the event of an anomaly in the acceleration sensor 11, the first brake control is not performed even when the time-to-collision TTC is equal to or less than the preset first threshold value TTC1. When the time-to-collision TTC is equal to or less than the preset second threshold value TTC2, the second brake control for generating a braking force according to the maximum deceleration rate is performed. Thus, in a risky state with an unavoidable collision with an obstacle, an emergency brake can be activated to avoid the collision or to reduce damage upon collision. Even when the time-to-collision TTC is equal to or less than the first threshold value TTC in the event of an anomaly in the acceleration sensor 11, automatic brake control to prompt or encourage a driver to perform a braking operation is not performed. This can prevent the first brake control that generates a deceleration according to a distance to an obstacle, which may cause an uncomfortable feeling or an insecure feeling of a driver, in states other than a risky state with an unavoidable collision with an obstacle.
(4) The vehicle control system 1 further includes the friction coefficient computing unit 23 that is configured to compute the friction coefficient of a road surface on which the vehicle travels. When an anomaly of the acceleration sensor 11 is determined by the anomaly determination unit 22 and the friction coefficient computed by the friction coefficient computing unit 23 is less than a predetermined value, the adjusting unit 25 prohibits the execution of automatic brake control. On a road with a road surface having a low friction coefficient, for example, a so-called low friction road low µ road, the vehicle is more likely to behave unstably. In particular, if the operation of the driving stabilizing control system 40 including the skid preventing controller 41 and the traction controller 42 is stopped when an anomaly occurs in the acceleration sensor 11, the activation of automatic brake control may cause unstable behaviors of the vehicle. Thus, the execution of automatic brake control is prohibited on a low friction road or the like with a road surface having a low friction coefficient, and the execution of automatic brake control is permitted only on a high friction road or high µ road, thereby safely performing automatic brake control.
(5) The vehicle control system 1 further includes the straight road determination unit (straight-ahead driving determination unit) 24 that is configured to determine whether or not a road on which the vehicle is traveling is a straight road. If the anomaly determination unit 22 determines an anomaly of the acceleration sensor 11 and the straight road determination unit 24 determines that the road on which the vehicle is traveling is not a straight road, the adjusting unit 25 prohibits the execution of automatic brake control. For example, on roads such as a curved road other than a straight road, driving operations such as driver manual steering may cause unstable behaviors of the vehicle. In particular, if the operation of the driving stabilizing control system 40 including the skid preventing controller 41 and the traction controller 42 is stopped when an anomaly occurs in the acceleration sensor 11, the activation of automatic brake control on a curved road may cause unstable behaviors of the vehicle. Thus, the execution of automatic brake control is prohibited when the road on which the vehicle is traveling is not a straight road while the execution of automatic brake control is permitted only when the road is a straight road, thereby safely performing automatic brake control.
(6) The vehicle control system 1 further includes the straight-ahead driving determination unit 24 that is configured to determine whether or not the vehicle is traveling straight ahead. If the anomaly determination unit 22 determines an anomaly of the acceleration sensor 11 and the straight-ahead driving determination unit 24 determines that the vehicle is not traveling straight ahead, the adjusting unit 25 prohibits the execution of automatic brake control. Thus, as in (5) above, the execution of automatic brake control is prohibited when the vehicle is not traveling straight ahead, and the execution of automatic brake control is permitted only when the vehicle is traveling straight ahead, thereby safely performing automatic brake control.
(7) Automatic brake control has an overriding function that stops automatic brake control and transfers authority to a driver when steering intervention of an override threshold value or greater is performed during the execution of automatic brake control. When an anomaly of the acceleration sensor 11 is determined by the anomaly determination unit 22, the adjusting unit 25 reduces the override threshold value to a smaller value than in a case in which no anomaly of the acceleration sensor 11 is determined. Thus, when an anomaly occurs in the acceleration sensor 11, automatic brake control can be terminated quickly by driver intervention, achieving a driving operation in response to a driver's intention.
(8) The acceleration sensor 11 is configured as a biaxial acceleration sensor that is capable of detecting the lateral acceleration rate of the vehicle in addition to the longitudinal acceleration rate of the vehicle. When an anomaly of the acceleration sensor 11 is determined by the anomaly determination unit 22, the adjusting unit 25 prohibits the activation of at least one of the skid preventing controller 41 that reduces the torque of the drive device 50 of the vehicle by using a detection signal from the acceleration sensor 11 and/or reduces a skid of the vehicle by activating the braking device 30 and the traction controller 42 that reduces the torque of the drive device 50 of the vehicle by using the detection signal from the acceleration sensor 11 and/or reduces an overspeed of wheels by activating the braking device 30.

### Modification

(1) In the foregoing embodiment, the controller 20 includes the friction coefficient computing unit 23 and is configured to prohibit the execution of automatic brake control when the vehicle travels on a road with a road surface having a friction coefficient less than a predetermined value. However, the configuration is not limited thereto. The friction coefficient computing unit 23 may be omitted and the execution of automatic brake control may be permitted or prohibited regardless of the friction coefficient of the road surface.
(2) In the foregoing embodiment, the controller 20 includes the straight-ahead driving determination unit 24 and is configured to prohibit the execution of automatic brake control when the vehicle is not traveling straight ahead or when a road on which the vehicle is traveling is not a straight road. However, the configuration is not limited thereto. The execution of automatic brake control may be permitted or prohibited regardless of whether or not the vehicle is traveling straight ahead or whether or not a road on which the vehicle is traveling is a straight road. In this case, the road shape acquisition device 13 and the straight-ahead driving determination unit 24 can be omitted.
(3) In the foregoing embodiment, when an anomaly occurs in the acceleration sensor 11, the override threshold value of automatic brake control is changed to the value OR2 smaller than the normal override threshold value OR1 for which no anomaly of the acceleration sensor 11 is determined. However, the configuration is not limited thereto. The normal override threshold value OR1 may be used as it is when an anomaly occurs in the acceleration sensor 11.
(4) In the foregoing embodiment, when an anomaly of the acceleration sensor 11 is determined, the target deceleration is fixed at the maximum deceleration rate of automatic brake control, the maximum deceleration rate serving as the second deceleration rate for performing the second brake control. However, the deceleration rate is not limited to the maximum deceleration rate = the second deceleration rate. As the second deceleration rate for performing the second brake control, a suitable target deceleration rate other than the maximum deceleration rate may be set.
(5) In the foregoing embodiment, the acceleration sensor 11 may be configured as a biaxial acceleration sensor. The configuration is not limited thereto. The acceleration sensor 11 may be configured as a triaxial acceleration sensor.
(6) In the foregoing embodiment, automatic brake control is configured to include a first brake control that generates a weak braking force to encourage a driver to perform a braking operation when it is determined that the vehicle is likely to collide with an obstacle, and a second brake control that generates a strong braking force according to the maximum deceleration rate when it is determined that a collision with an obstacle is unavoidable. However, the configuration is not limited thereto. Automatic brake control may be configured to include at least the second brake control.
(7) In the foregoing embodiment, the adjusting unit 25 is configured to prohibit the activation of at least one of the skid preventing controller 41 and the traction controller 42 when an anomaly of the acceleration sensor 11 is determined by the anomaly determination unit 22. However, the configuration is not thereto. The controller 20 may be configured to receive, from the driving stabilizing control system 40, the anomaly determination signal indicating an anomaly of the acceleration sensor 11 and a signal indicating the prohibition of the activation of the skid preventing controller 41 and the traction controller 42.

The embodiment of the present invention was described in the foregoing description. The present invention is not limited to the embodiments described above and can be modified and changed in various ways within the scope of the present invention.

### [Reference Signs List]

- 1: Vehicle control system
- 10: Obstacle detector
- 11: Acceleration sensor (acceleration detector)
- 21a: Collision determination unit
- 21b: Deceleration setting unit
- 21c: Brake control unit
- 22: Anomaly determination unit
- 23: Friction coefficient computing unit
- 24: Straight-ahead driving determination unit (straight road determination unit)
- 25: Adjusting unit
- 30: Braking device
- 41: Skid preventing controller
- 42: Traction controller
- 50: Drive device

## Claims

1. A vehicle control system comprising:
an obstacle detector that is configured to detect an obstacle ahead of a vehicle;
an acceleration detector that is configured to detect a longitudinal acceleration rate of the vehicle;
a collision determination unit that is configured to determine a probability of collision to the obstacle;
a deceleration setting unit that is configured to set a target deceleration rate for performing automatic brake control according to a collision probability determined by the collision determination unit;
a brake control unit that is configured to control a deceleration rate of the vehicle on the basis of the longitudinal acceleration rate detected by the acceleration detector such that a braking force is generated according to the target deceleration rate set by the deceleration setting unit;
an anomaly determination unit that is configured to determine an anomaly of the acceleration detector; and
an adjusting unit that is configured to change the target deceleration rate to a preset fixed value and to adjust activation of the brake control unit such that a braking force is generated according to the fixed value, when an anomaly of the acceleration detector is determined by the anomaly determination unit.

2. The vehicle control system according to claim 1, wherein the adjusting unit sets a maximum deceleration rate in the automatic brake control as the fixed value.

3. The vehicle control system according to claim 2, wherein:
the automatic brake control includes:
a first brake control that generates a braking force according to a first deceleration rate less than the maximum deceleration rate to prompt a driver to perform a braking operation when the collision determination unit determines that the vehicle is likely to collide with the obstacle; and
a second brake control that generates a braking force according to the maximum deceleration rate when the collision determination unit determines that a collision with the obstacle is unavoidable; and
when an anomaly of the acceleration detector is determined by the anomaly determination unit, the adjusting unit prohibits execution of the first brake control.

4. The vehicle control system according to claim 1, further comprising a friction coefficient computing unit that is configured to estimate a friction coefficient of a road surface on which the vehicle travels, wherein when an anomaly of the acceleration detector is determined by the anomaly determination unit and the friction coefficient is estimated to be less than a predetermined value by the friction coefficient computing unit, the adjusting unit prohibits execution of the automatic brake control.

5. The vehicle control system according to claim 1, further comprising a straight road determination unit that is configured to determine whether or not a road on which the vehicle is traveling is a straight road,
wherein when an anomaly of the acceleration detector is determined by the anomaly determination unit and the straight road determination unit determines that the road on which the vehicle is traveling is not a straight road, the adjusting unit prohibits execution of the automatic brake control.

6. The vehicle control system according to claim 1, further comprising a straight-ahead driving determination unit that determines whether the vehicle is traveling straight ahead,
wherein when an anomaly of the acceleration detector is determined by the anomaly determination unit and the straight-ahead driving determination unit determines that the vehicle is not traveling straight ahead, the adjusting unit prohibits execution of the automatic brake control.

7. The vehicle control system according to claim 1, wherein:
the automatic brake control has an overriding function that stops the automatic brake control and transfers authority to a driver when steering intervention at an override threshold value or greater is performed during execution of the automatic brake control; and
when an anomaly of the acceleration detector is determined by the anomaly determination unit, the adjusting unit reduces the override threshold value to a smaller value than in a case in which no anomaly of the acceleration detector is determined.

8. The vehicle control system according to any one of claims 4 to 7, wherein:
the acceleration detector is configured as a biaxial acceleration sensor that is capable of detecting a lateral acceleration rate of the vehicle in addition to a longitudinal acceleration rate of the vehicle; and
when an anomaly of the acceleration detector is determined by the anomaly determination unit, the adjusting unit prohibits activation of at least one of:
a skid preventing controller that is configured to reduce a torque of a drive device of the vehicle by using a detection signal from the acceleration detector and/or to reduce a skid of the vehicle by activating the braking device; and
a traction controller that is configured to reduce a torque of the drive device of the vehicle by using the detection signal from the acceleration detector and/or to reduce an overspeed of a wheel by activating the braking device.
